# EUROPEAN PATENT SPECIFICATION

(11) **EP 4 293 048 B1**
(45) Date of publication and mention of the grant of the patent: **20.11.2024**
(21) Application number: 23179578.2
(22) Date of filing: 15.06.2023
(51) Int. Cl.: C08B 11/193

(54) **LIQUID COMPOSITION COMPRISING HYDROXYPROPYL METHYL CELLULOSE AND ORGANIC SOLVENT**
FLÜSSIGE ZUSAMMENSETZUNG MIT HYDROXYPROPYLMETHYLCELLULOSE UND ORGANISCHEM LÖSUNGSMITTEL
COMPOSITION LIQUIDE COMPRENANT DE L'HYDROXYPROPYLMÉTHYLCELLULOSE ET UN SOLVANT ORGANIQUE

(30) Priority: 16.06.2022 JP 2022097328
(43) Date of publication of application: 20.12.2023
(73) Proprietor: SHIN-ETSU CHEMICAL CO., LTD., Tokyo 1000005 (JP)
(72) Inventor: MIKI, Kentaro, NIIGATA, 942-8601 (JP); YOKOSAWA, Takuya, NIIGATA, 942-8601 (JP)
(74) Representative: Cabinet Nony

(56) References cited:
- EP-A1- 1 803 738
- EP-A1- 2 829 553

## Description

### BACKGROUND OF THE INVENTION

### 1. Field of the Invention

The invention relates to a liquid composition comprising hydroxypropyl methyl cellulose and an organic solvent.

### 2. Related Art

A composition containing hydroxypropyl methyl cellulose (hereinafter also referred to as "HPMC") and an organic solvent has been utilized in a variety of applications. Examples of the composition containing HPMC and an alcohol as an organic solvent include a hand disinfectant, a cooling agent for pharmaceuticals and foods, a cosmetic such as a hair gel, and a fragrance. A composition containing HPMC and an organic solvent such as dichloromethane and N-methyl-2-pyrrolidone is known to be used as a coating release agent.

However, depending on a type or a composition ratio of the organic solvent, HPMC may not have sufficient solubility, or may be difficult to dissolve in the organic solvent in the first place, and even if it is dissolved in the organic solvent, the transparency and storage stability of the composition may not be good. Therefore, there is a need to improve the solubility of HPMC in an organic solvent.

In order to improve the solubility of HPMC in an organic solvent, it is known to increase the degree of substitution (DS) of methoxy groups or the molar of substitution (MS) of hydroxypropoxy groups. As such an example of HPMC, a Methocel^{™} 310 having a high degree of substitution (DS) of methoxy groups and a high molar substitution (MS) of hydroxypropoxy groups has been reported (Dow Chemical Company "METHOCHEL Cellulose Ethers Technical Handbook", U.S., September 2002, pages 4 to 6).

Further, the solubility of HPMC is reported to be enhanced by improving the method for preparing a composition containing HPMC and an organic solvent (JP 2015-524425A, which is the Japanese phase publication of WO 2014/017756A1).

### SUMMARY OF THE INVENTION

However, in the method of JP 2015-524425A, it is necessary to heat the solution during the preparation of a composition containing HPMC and an organic solvent, thereby generating a risk of ignition and making the process complicated. Further, the method of JP 2015-524425A requires water in the composition so that it has a problem that the composition cannot be applied to the preparation of a water-free composition.

On the other hand, increasing of DS of methoxy groups or MS of hydroxypropoxy groups, such as those in Dow Chemical Company of Technical Handbook, results in high cost, and also changes the physical properties (such as thermal gel properties and tackiness) other than the solubility of HPMC. Hence, there is a demand for improving the solubility in an organic solvent without changing DS of methoxy groups or MS of hydroxypropoxy groups.

The invention has been made in view of the above problems, and provides HPMC having high solubility, which can be easily dissolved in a solvent even when MS is the same as that of the conventional HPMC.

As a result of intensive studies, the inventors have found that hydroxypropyl methyl cellulose having a molar substitution (MS) of hydroxypropoxy groups of from 0.1 to 0.5, and a ratio (referred to as "MF at 3-position/MS") of 0.12 or more, as calculated by dividing a molar fraction (referred to as "MF at 3-position") of anhydroglucose units in which only a hydroxy group at the 3-position carbon has been substituted with a hydroxypropoxy groups, and none of hydroxy groups at the 2-position and 6-position carbons has been substituted with a hydroxypropoxy group by a molar substitution (referred to as "MS") of hydroxypropoxy groups, has a high solubility in an organic solvent, and have completed the invention.

In one aspect of the invention, there is provided hydroxypropyl methyl cellulose having
a molar substitution (referred to as "MS") of hydroxypropoxy groups of from 0.1 to 0.5;
a ratio (referred to as "MF at 3-position/MS") of 0.12 or more, as calculated by dividing a mole fraction (referred to as "MF at 3-position") of anhydroglucose units in which only a hydroxy group at the 3-position carbon is substituted with a hydroxypropoxy groups, and none of hydroxy groups at the 2-position and 6-position carbons is substituted with a hydroxypropoxy group by a molar substitution (referred to as "MS") of hydroxypropoxy groups; and
a viscosity at 20°C of more than 50 mPa·s and not more than 150000 mPa·s, as determined in a 2% by mass aqueous solution.

In another aspect of the invention, there is provided a liquid composition comprising hydroxypropyl methyl cellulose and an organic solvent.

In still another aspect of the invention, there is provided a method for producing hydroxypropyl methyl cellulose, the method comprising steps of:
bringing pulp into contact with an alkali metal hydroxide solution to obtain alkali cellulose;
mixing the alkali cellulose with dimethyl ether and a first methylating agent to form a first reaction product mixture;
mixing the first reaction product mixture with a second methylating agent and a hydroxypropylating agent without further incorporation of an alkali metal hydroxide to obtain a second reaction product mixture;
purifying the second reaction product mixture to obtain hydroxypropyl methyl cellulose; and
drying the hydroxypropyl methyl cellulose to obtain dried hydroxypropyl methyl cellulose;
wherein a reaction percentage of the hydroxypropylating agent is from 50% to 90% at the time when a total reaction percentage of the first and second methylating agents is 50%, regarding a reaction percentage of the hydroxypropylating agent and a total reaction percentage of the first and second methylating agents as respective 100% at the time when a degree of substitution (DS) of methoxy groups and a molar substitution (MS) of hydroxypropoxy groups of hydroxypropyl methyl cellulose in the second reaction product mixture become equal to a degree of substitution (DS) of methoxy groups and a molar substitution (MS) of hydroxypropoxy groups of the dried hydroxypropyl methyl cellulose, respectively.

The molar substitution (MS) of hydroxypropoxy groups means the average mole number of the hydroxypropoxy groups per mole of anhydroglucose units.

According to the invention, there can be provided a liquid composition having improved solubility when HPMC is dissolved in an organic solvent, high transparency, and good storage stability. Further, according to the invention, there can be provided a liquid composition having the above-described properties even when no water is contained or a content of the organic solvent is 60% by mass or more.

### DETAILED DESCRIPTION OF THE PREFERRED EMBODIMENTS

### (1) HPMC

First, HPMC will be described.

Regarding HPMC, a ratio (referred to as "MF at 3-position/MS") of a molar fraction (referred to as "MF at 3-position") of the anhydroglucose units in which only a hydroxy group at the 3-position carbon is substituted with a hydroxypropoxy group and none of hydroxy groups at the 2-position and 6-position carbons is substituted with a hydroxypropoxy group to a molar substitution (referred to as "MS") of hydroxypropoxy groups is 0.12 or more, preferably from 0.12 to 0.30, more preferably from 0.14 to 0.25, and most preferably from 0.15 to 0.20. By using said ratio, a preferable solubility in an organic solvent may be ensured.

Regarding HPMC, a molar fraction (MF at 3-position) of anhydroglucose units in which only a hydroxy group at the 3-position carbon is substituted with a hydroxypropoxy group and none of hydroxy groups at the 2-position and 6-position carbons is substituted with a hydroxypropoxy group means the sum of the average molar fractions (i) to (iv) as defined below.
(i) an average molar fraction of the anhydroglucose units in which among the hydroxy groups at the 2-, 3- and 6-position carbons, each hydroxy group at the 2- and 6-postition carbons is substituted with a methoxy group and a hydroxy group at the 3-positon carbon is substituted with a hydroxypropoxy or methoxypropoxy group.
(ii) an average molar fraction of the anhydroglucose units in which among the hydroxy groups at the 2-, 3- and 6-position carbons, a hydroxy group at the 2-position carbon is substituted with a methoxy group, a hydroxy group at the 6-position carbon is not substituted, and the hydroxy group at the 3-position carbon is substituted with a hydroxypropoxy or methoxypropoxy group.
(iii) an average molar fraction of the anhydroglucose units in which among the hydroxy groups at the 2-, 3- and 6-position carbons, a hydroxy group at the 2-position carbon is not substituted, a hydroxy group at the 6-position carbon is substituted with a methoxy group, and a hydroxy group at the 3-position carbon is substituted with a hydroxypropoxy or methoxypropoxy group.
(iv) an average molar fraction of the anhydroglucose units in which among the hydroxy groups at the 2-, 3- and 6-position carbons, each hydroxy group at the 2- and 6-position carbons is not substituted, and a hydroxy group at the 3-position carbon is substituted with a hydroxypropoxy or methoxypropoxy group.

The molar fraction "MF at 3-position" of HPMC is not particularly limited. It is preferably 0.027 or more, more preferably from 0.027 to 0.050, still more preferably from 0.027 to 0.045, and particularly preferably from 0.040 to 0.045. By using said molar fraction "MF at 3-position", preferable solubility in an organic solvent may be ensured.

Regarding HPMC, the molar fraction (MF at 3-position) of anhydroglucose units in which only a hydroxy group at the 3-position carbon is substituted with a hydroxypropoxy group and none of the hydroxy groups at the 2-position and 6-position carbons is substituted with a hydroxypropoxy group can be determined from the respective detection graph properties identified by using a mass spectrometer and any one of ¹³C-NMR, liquid chromatography and gas chromatography, after HPMC is hydrolyzed in sulfuric acid, then neutralized, filtered, reduced, and further acetylated, as described in Macromolecules, 1987, 20, 2413 and Journal of Fiber Sciences, 1984, 40, T-504.

According to the invention, the molar fraction (MF at 3-position) was determined by the following method.

First, 50 mg of hydroxypropyl methyl cellulose is subjected to addition of 2 ml of a 3% by mass aqueous sulfuric acid solution and hydrolyzed at 140°C for 3 hours to obtain a hydrolysate, and then subjected to addition of 0.8 g of barium carbonate to neutralize the hydrolysate.

Then, the neutralized hydrolysate is dissolved by adding 3mL of methanol, and subjected to centrifugation at 500G. The supernatant liquid is filtered through a filter having openings of 0.45 µm to collect a filtrate. Then, 3mL of the filtrate is subjected to addition of 120 µL of a solution in which 1.5 g of NaBH₄ is dissolved in 10 mL of 0.2 N (i.e., 0.2 mol/L) aqueous sodium hydroxide solution, and the glucose ring is reduced at 37 to 38°C for 1 hour. The resulting mixture is subjected to addition of 100 µL of acetic acid, and then heated at 100°C for 1 hour under atmospheric pressure with nitrogen blowing to evaporate the solvent to obtain a solid. Then, the obtained solid is subjected to addition of 2 mL of pyridine and 1.5 ml of acetic anhydride, is acetylated at 100°C for 1.5 hours, and then subjected to centrifugation at 500G. The supernatant liquid is filtered through a filter having openings of 0.45 µm to collect a filtrate. A filtrate is heated to 100°C for 1 hour under atmospheric pressure with nitrogen blowing to remove pyridine, acetic anhydride and acetic acid, and then redissolved in 1 ml of diethylene glycol dimethyl ether to obtain a sample. The obtained sample can be subjected to gas chromatography (GC) to measure the molar fraction (MF at 3-position) based on the peak area.

The GC analysis of the sample can be done as follows. To a GC2010 (produced by Shimadzu Corporation) equipped with DB-5 columns (length of 30 m, diameter of 0.25 mm, and film thickness of 0.25 µm), 1 µL of the sample solution is injected under the conditions of carrier gas: helium, pressure of helium: 100kPa, and an inlet temperature: 300°C. The column is held at 150°C for 3 minutes, then heated to 275°C at a rate of 2°C/minute, then heated to 300°C at a rate of 15°C/minute, and then held at 300°C for 5 minutes. The retention time and the peak area of each component are measured by using an FID detector set at 300°C.

The structure corresponding to each detection peak is identified in advance by a mass spectrometer. Each peak of the sample is identified in comparison with the peak identified by the mass spectrometer. A molar fraction (MF at 3-position) of anhydroglucose units in which only a hydroxy group at the 3-position carbon is substituted with a hydroxypropoxy group and none of the hydroxy groups at the 2-position and 6-position carbons is substituted with a hydroxypropoxy group is determined based on a ratio of peak areas. A ratio of the molar fraction (MF at 3-position) to the molar substitution (MS) of hydroxypropoxy groups is obtained by dividing the former by the latter.

A degree of substitution (DS) of methoxy groups of HPMC is not particularly limited. It is preferably from 1.0 to 2.2, more preferably from 1.5 to 2.2, and still more preferably from 1.7 to 2.2. By using said degree of substitution, preferable solubility in an organic solvent may be ensured. The degree of substitution (DS) of methoxy groups means an average number of methoxy groups per anhydroglucose unit.

The molar substitution (MS) of hydroxypropoxy groups of HPMC is not particularly limited. It is preferably from 0.05 to 0.50, more preferably from 0.10 to 0.40, still more preferably from 0.15 to 0.35, and particularly preferably from 0.18 to 0.35. By using said molar substitution, preferable solubility in an organic solvent and preferable tackiness of the liquid composition may be ensured. The molar substitution (MS) of hydroxypropoxy groups means an average mole number of hydroxypropoxy groups per mole of anhydroglucose unit.

The DS of methoxy groups and the MS of hydroxypropoxy groups of HPMC may be determined by converting the values measured in accordance with the Japanese Pharmacopoeia Seventeenth Edition.

HPMC is preferably 2910 type HPMC having methoxy groups of from 28.0 to 30.0% and hydroxypropoxy groups of from 7.0 to 12.0%, 2906 type HPMC having methoxy groups of from 27.0 to 30.0% and hydroxypropoxy groups of from 4.0 to 7.5%, or 2208 type HPMC having methoxy groups of from 19.0 to 24.0% and hydroxypropoxy groups of from 4.0 to 12.0%, as described in Hypromellose in the Japanese Pharmacopoeia Seventeenth Edition. It is more preferably 2910 type HPMC or 2906 type HPMC, and particularly preferably 2910 type HPMC. By using said above type HPMC, preferably solubility in an organic solvent may be ensured.

On the other hand, when an amount of the hydroxypropoxy groups is excessively high, such as that of type 1828 HPMC having methoxy groups of from 16.5 to 20.0% and hydroxypropoxy groups of from 23.0 to 32.0%, the tackiness of the liquid composition may be high.

A viscosity at 20°C of the 2.0% by mass aqueous solution of HPMC is more than 50 mPa·s and not more than 150,000mPa·s, more preferably from 80 mPa·s to 80,000 mPa·s, still more preferably from 500 mPa·s to 50,000 mPa·s, and particularly preferably from 500 mPa·s to 13,000 mPa·s. When the viscosity at 20°C of the 2.0% by mass aqueous solution of HPMC is less than 50 mPa·s, the viscosity-increasing effect added to the organic solvent-containing composition is weak, and the viscosity stability of the organic solvent-containing composition is insufficient. On the other hand, when the viscosity at 20°C of the 2.0% by mass aqueous solution of HPMC is more than 150,000 mPa·s, the HPMC has poor solubility due to poor compatibility with the organic solvent, and as a result, the viscosity increasability and/or transparency of the organic solvent-containing composition is lowered.

When the viscosity at 20°C of the 2.0% by mass aqueous solution of HPMC is 600 mPa·s or more, the viscosity may be determined using a single cylinder-type rotational viscometer in accordance with the viscosity measurement by rotational viscometer of General Tests in the Japanese Pharmacopoeia Seventeenth Edition. When the viscosity at 20°C of the 2.0% by mass aqueous solution of HPMC is less than 600 mPa·s, the viscosity may be determined using a Ubbelohde type viscometer in accordance with the viscosity measurement by capillary tube viscometer of General Tests in the Japanese Pharmacopeia Seventeenth Edition.

Regarding a combination of the ratio (MF at 3-position/MS), the viscosity at 20°C of the 2% by mass aqueous solution and a degree of substitution (DS) of methoxy groups of HPMC, when the ratio (MF at 3-position/MS) is 0.12 or more, the viscosity of HPMC is preferably from 80 to 80,000 mPa·s and the DS is preferably from 1.0 to 2.2. The ratio (MF at 3-position/MS) is preferably from 0.12 to 0.30. When the ratio (MF at 3-position/MS) is from 0.12 to 0.30, the viscosity of HPMC is more preferably from 500 to 50,000 mPa·s and the DS is more preferably from 1.5 to 2.2. The ratio (MF at 3-position/MS) is more preferably from 0.14 to 0.25. When the ratio (MF at 3-position/MS) is from 0.14 to 0.25, the viscosity of HPMC is still more preferably from 500 to 13,000 mPa·s and the DS is still more preferably from 1.7 to 2.2.

### (2) Method for producing HPMC

Next, a method for producing HPMC having a predetermined ratio (MF at 3-position/MS) will be described.

HPMC having a predetermined ratio (MF 3-position/MS) is produced by the method comprising steps of: for example,
bringing pulp into contact with an alkali metal hydroxide solution to obtain alkali cellulose;
mixing the alkali cellulose with dimethyl ether and a first methylating agent to form a first reaction product mixture;
mixing the first reaction product mixture with a second methylating agent and a hydroxypropylating agent without further incorporation of an alkali metal hydroxide to obtain a second reaction product mixture;
purifying the second reaction product mixture to obtain HPMC; and
drying the HPMC to obtain dried HPMC
wherein a reaction percentage of the hydroxypropylating agent is from 50% to 90% at the time when a total reaction percentage of the first and second methylating agents is 50%, regarding a reaction percentage of the hydroxypropylating agent and a total reaction percentage of the first and second methylating agents as 100% at the time when a degree of substitution (DS) of methoxy groups and a molar substitution (MS) of hydroxypropyl groups of hydroxypropyl methyl cellulose in the second reaction product mixture become equal to a degree of substitution (DS) of methoxy groups and a molar substitution (MS) of hydroxy groups of the dried hydroxypropyl methyl cellulose, respectively.

First, a step of bringing pulp into contact with an alkali metal hydroxide solution to obtain alkali cellulose is described.

Examples of the pulp include cellulose pulp such as wood pulp and linter pulp. The pulp may be used in any form such as powder form, sheet form and chip form. The pulp is preferably in sheet form or chip form. By using said form, preferable solubility of HPMC in an organic solvent as well as ease of handling and preferable liquid removal property of alkali cellulose may be ensured.

The intrinsic viscosity of the pulp, which is an indicator of the polymerization degree of the pulp, is preferably from 300 to 2500 ml/g, more preferably from 350 to 2300 ml/g, and still more preferably from 400 to 2000 ml/g. When the intrinsic viscosity is less than 300 ml/g, there is a possibility that the viscosity of the obtained HPMC may become low, and there is a possibility that the washability of the crude HPMC may deteriorate. When the intrinsic viscosity is more than 2500 ml/g, there is a possibility that the obtained HPMC may have inferior solubility in an organic solvent. The intrinsic viscosity of the pulp may be determined in accordance with Method A in JIS P8215.

Examples of the alkali metal hydroxide solution include an aqueous alkali metal hydroxide solution such as an aqueous sodium hydroxide solution or an aqueous potassium hydroxide solution. A concentration of the alkali metal hydroxide in the alkali metal hydroxide solution is preferably from 23 to 60% by mass. By using said concentration, preferable economical efficiency and operability may be ensured.

The mass ratio of the alkali metal hydroxide in the alkali cellulose to the solid component in the pulp (alkali metal hydroxide/solid component in the pulp) is not particularly limited as long as the intended degree of substitution (DS) of methoxy groups and the intended molar substitution (MS) of hydroxypropoxy groups are obtained. It is preferably from 0.30 to 1.50, and more preferably from 0.35 to 1.45.

An amount of the alkali metal hydroxide solution to be used may be appropriately selected in accordance with the above-described mass ratio. The mass of the alkali metal hydroxide component may be calculated based on neutralization titration.

The solid component in the pulp means components other than moisture (i.e., water) in the pulp. The solid component in the pulp includes, in addition to the cellulose as a main component, organic matter such as hemicellulose, lignin and resin, and inorganic matter such as Si and Fe components. The solid component in the pulp may be calculated from the dry matter content determined in accordance with Pulps - Determination of Dry Matter Content in JIS P8203:1998. The dry matter content is the ratio of the mass of the sample being subjected to drying at 105 ± 2°C and reaching constant mass to the mass of the sample prior to the drying. The dry matter content is expressed in % by mass.

Embodiments in which the pulp is brought into contact with the alkali metal hydroxide solution include immersing a pulp sheet in an excess of the alkali metal hydroxide solution. The pulp sheet having sufficiently absorbed the alkali metal hydroxide solution is, for example, pressed to remove the excess alkali metal hydroxide solution and obtain a pulp sheet having a predetermined mass ratio of the alkali metal hydroxide to the solid component in the pulp. The concentration of the alkali metal hydroxide solution to be contacted with the pulp is preferably kept constant in order to stabilize the composition of the alkali cellulose.

In the step of bringing pulp into contact with the alkali metal hydroxide solution, an organic solvent such as dimethyl ether, a methylating agent such as methyl chloride, and a hydroxypropylating agent such as propylene oxide are not present.

Next, the step of mixing the alkali cellulose with dimethyl ether and a first methylating agent to form a first reaction product mixture is described. In a preferable embodiment, the alkali cellulose is subjected to addition of a mixture of dimethyl ether and a first methylating agent, and mixed with stirring to form a first reaction product mixture.

The mass ratio of dimethyl ether to the solid component in the starting pulp (dimethyl ether/solid component in the starting pulp) is preferably from 0.5 to 2.0. By using said mass ratio, preferable solubility of HPMC in an organic solvent may be ensured.

Examples of the first methylating agent include methyl chloride. The mass ratio of the first methylating agent to the solid component in the starting pulp (first methylating agent/solid component in the starting pulp) is preferably from 0.05 to 0.50. By using said mass ratio, preferable solubility of HPMC in an organic solvent may be ensured. The mass ratio of dimethyl ether to the first methylating agent (dimethyl ether/first methylating agent) is preferably from 2.0 to 20.0. By using said mass ratio, preferable solubility of HPMC in an organic solvent may be ensured.

The temperature for the embodiment in which the alkali cellulose is subjected to addition of a mixture of dimethyl ether and a first methylating agent, and mixed with stirring to form a first reaction product mixture, is preferably at 20 to 70°C. By using said temperature, preferable solubility of HPMC in an organic solvent may be ensured. The time for mixing with stirring after addition of the mixture of dimethyl ether and the first methylating agent to the alkali cellulose is preferably from 0.1 to 30 minutes. By using said mixing time, preferable solubility of HPMC in an organic solvent may be ensured.

Next, the step of mixing the first reaction product mixture with a second methylating agent and a hydroxypropylating agent without further incorporation of an alkali metal hydroxide to obtain a second reaction product mixture is described. In a preferable embodiment, the first reaction product mixture is subjected to addition of a second methylating agent and a hydroxypropylating agent without further addition of an alkali metal hydroxide to obtain a second reaction product mixture comprising HPMC as a product.

Examples of the second methylating agent include methyl chloride. The mass ratio of the second methylating agent to the solid component in the starting pulp (second methylating agent/solid component in the pulp) is not limited as long as the intended degree of substitution (DS) of methoxy groups is obtained. It is preferably from 0.9 to 2.5. By using said mass ratio, preferable economical efficiency may be ensured. The first methylating agent and the second methylating agent may be of the same type or of different types. They are preferably of the same type. By using the same type, preferable ease of purifying HPMC may be ensured.

The mass ratio of the first methylating agent to the second methylating agent (first methylating agent/second methylating agent) is preferably from 0.01 to 0.20. By using said mass ratio, preferable solubility of HPMC in an organic solvent may be ensured.

Examples of the hydroxypropylating agent include propylene oxide. The mass ratio of the hydroxypropylating agent to the solid component in the starting pulp (hydroxypropylating agent/solid component in the starting pulp) is not limited as long as the intended molar substitution (MS) of hydroxypropoxy groups is obtained. It is preferable to use the hydroxypropylating agent so as to make the mass ratio to be from 0.2 to 1.5. By using said mass ratio, preferable economical efficiency may be ensured.

The second methylating agent and the hydroxypropylating agent may be added simultaneously to the first reaction product mixture, or either the second methylating agent or the hydroxypropylating agent may be preferentially added to the first reaction product mixture.

The anhydroglucose unit of cellulose has three substitutable hydroxy groups. Regarding the methylation, in general, the hydroxy group at the 2-position carbon of the glucose anhydride unit is the most reactive, the hydroxy group at the 6-position carbon is less reactive, and the hydroxy group at the 3-position carbon is the least reactive. Regarding the hydroxypropylation, in general, the hydroxy group at the 6-position carbon of the anhydroglucose unit is the most reactive, and the reactivity of each hydroxy group at the 2- and 3-position carbons is less reactive. Regarding the hydroxypropylation, the reactivity of the hydroxy group at the 2-position carbon is almost same as the reactivity of the hydroxy group at the 3-position carbon. Hence, in order to increase the ratio of the molar faction (MF at 3-position) to MS, hydroxypropylation of each hydroxy group at the 2- and 6-position carbons is suppressed, and hydroxypropylation of the hydroxy group at the 3-position carbon is allowed to proceed.

One of the methods for increasing the ratio (MF at 3-position/MS) includes controlling a reaction percentage of the hydroxypropylating agent relative to a total reaction percentage of the first and second methylating agents. A reaction percentage of the hydroxypropylating agent is from 50% to 90% at the time when a total reaction percentage of the first and second methylating agents is 50%, regarding a reaction percentage of the hydroxypropylating agent and a total reaction percentage of the methylating agents as 100% at the time when a final degree of substitution (DS) of methoxy groups and a final molar substitution (MS) of hydroxypropoxy groups of HPMC are obtained. By using said reaction percentages, preferable control of the ratio (MF at 3-position/MS) may be ensured.

Here, "total reaction percentage of the methylating agents" refers to the total reaction percentage (expressed as a percentage) of the methylating agents at an arbitrary time point, regarding the total reaction percentage as 100% when the methylating agents are reacted in such a molar amount (equimolar amount) that the molar amount of the alkali metal hydroxide in the alkali cellulose becomes equal to the molar amount of methyl groups contributing to the methylation. For example, the total reaction percentage of the methylating agents in the case of using methyl chloride as the first and second methylating agents is a ratio (expressed as percentage) of the reacted molar amount of methyl chloride at an arbitrary time point to the same molar amount (equimolar amount) of the methylating agents as the molar amount of the alkali metal hydroxide in the alkali cellulose. It is because the alkali metal hydroxide in the alkali cellulose is consumed in a molar amount equal to the reacted molar amount of methyl chloride.

When methylation is carried out using a methylating agent and an alkali metal hydroxide, the methylating agent is used typically in a molar amount equal to or more than the molar amount of the alkali metal hydroxide in order to enhance the efficiency of methylation. However, the excess molar amount of the methylating agent, which exceeds the molar amount of the alkali metal hydroxide, is irrelevant to the calculation of the reaction percentage of the methylating agent.

The term "reaction percentage of the hydroxypropylating agent" means the ratio of the molar amount of the hydroxypropyl groups generated through the hydroxypropylation by the hydroxypropylating agent at an arbitrary time point to the overall molar amount of the hydroxypropyl groups generated through the hydroxypropylation, and is expressed as a percentage.

Although the methylation is based on a molar amount equal to a molar amount of alkali metal hydroxide in alkali cellulose, the hydroxypropylation is based on the overall molar amount of hydroxypropyl groups generated through the hydroxypropylation by the hydroxypropylating agent. It is because, for example, after propylene oxide is reacted as the hydroxypropylating agent, the propylene oxide is changed into a hydroxypropyl group and acts as an alkoxide, so that the alkali metal hydroxide derived from alkali cellulose functions as a catalyst, and the reaction between the hydroxypropylating agent and the alkali metal hydroxide does not proceed stoichiometrically.

The target of the methylation and hydroxypropylation is not limited to O-alkali metal (e.g., -ONa) in alkali cellulose, but includes water in a reaction system, methanol generated by the reaction of a methylating agent with an alkali metal hydroxide derived from alkali cellulose and/or water, and propylene glycol generated by the reaction of a hydroxypropylating agent with an alkali metal hydroxide or water.

The total reaction percentage of the methylating agents and the reaction percentage of the hydroxypropylating agent may be determined by a method comprising steps of quickly recovering the methylating agent or the hydroxypropylating agent from the reactor to determine the amount of the methylating agent or hydroxypropylating agent remaining in the reactor at an arbitrary time point, and diving the reacted amount of the methylating agent or hydroxypropylating agent at the arbitrary time point by the overall amount of the methylating agent or the hydroxypropylating agent to be added into the reactor. However, the total reaction percentage of the methylating agents is calculated using the molar amount obtained by subtracting the excess molar amount from the recovered molar amount after the recovered molar amount becomes equal to or less than the molar amount obtained by subtracting the excess molar amount from the blended molar amount, regarding the total reaction percentage of the methylating agents as 100% at the time when the methylating agent is reacted in such a molar amount (equimolar amount) that the molar amount of the alkali metal hydroxide in the alkali cellulose becomes equal to the molar amount of methyl groups contributing to the methylation.

The total reaction percentage of the methylating agents and the reaction percentage of the hydroxypropylating agent may also be obtained by using a simulation based on a chemical reaction rate equation obtained by an experiment.

When the first reaction product mixture is blended with the second methylating agent and the hydroxypropylating agent, it is preferable to add the second methylating agent and the hydroxypropylating agent to the first reaction product mixture.

The blending time of the second methylating agent is not particularly limited as long as the reaction percentage of the hydroxypropylating agent to the total reaction percentage of the first and second methylating agents can be controlled. It is preferably from 5 to 100 minutes, and more preferably from 5 to 90 minutes. The blending time of the hydroxypropylating agent is not particularly limited as long as the reaction percentage of the hydroxypropylating agent to the total reaction percentage of the first and second methylating agents can be controlled. It is preferably from 5 to 80 minutes, and more preferably from 10 to 60 minutes.

The temperature of the etherification reaction after adding the second methylating agent and the hydroxypropylating agent is not particularly limited as long as the reaction percentage of the hydroxypropylating agent to the total reaction percentage of the first and second methylating agents can be controlled. It is preferably from 55 to 110°C. The temperature of the etherification reaction may be variable or constant within the above range.

Next, a step of purifying the second reaction product mixture to obtain HPMC is described. This step is for isolating HPMC from the second reaction product mixture. For example, the second reaction product mixture is washed, and then subjected to liquid removal such as filtering or pressing to separate HPMC from the second reaction product mixture.

The washing can be carried out by using, for example, water, or a mixture of water and an organic solvent (e.g., acetone). The temperature of the water or the mixture of water and an organic solvent to be used for the washing is preferably from 60 to 100°C.

The water content in the washed HPMC is preferably from 25 to 95% by mass, and more preferably from 35 to 95% by mass. By using said water content, preferable impurity removal and preferable adjustment of the water in the subsequent step may be ensured.

Next, a step of drying the obtained HPMC to obtain dried HPMC is described.

The drying can be conducted, for example, by using a dryer. Examples of the dryer include a fan dryer. Examples of the drying type include a hot air type, a conductive heating type, and a combination of these types. The drying temperature is preferably from 60 to 120°C. By using said drying temperature, preferable drying efficiency may be ensured. The drying time is preferably from 3 to 24 hours. By using said drying time, the preferable productivity may be ensured.

The dried HPMC may be subjected to optional pulverization. The pulverization is not particularly limited. Example of the pulverizer include an impact pulverization apparatus for pulverizing a material through collision of the material each other or collision of the material with a substrate; and a ball mill or roller mill for pulverizing a material by interposing the material between substrates.

The dried HPMC may be subjected to optional depolymerization with an acid. When the pulverization also is carried out, the depolymerization with an acid may be carried out before or after the pulverization.

Examples of the acid include a hydrogen halide such as hydrogen chloride. The acid may be used as an aqueous acid solution or the like. For example, hydrogen chloride may be used as hydrochloric acid (aqueous hydrogen chloride). The concentration of hydrogen chloride in the aqueous hydrogen chloride solution is preferably from 1 to 45% by mass. An amount of the acid to be used is preferably from 0.04 to 1.00 parts by mass relative to 100 parts by mass of HPMC.

The reaction temperature of the depolymerization with an acid is preferably from 40 to 85°C. The reaction time of the depolymerization with an acid is preferably from 0.1 to 4 hours. After the depolymerization with an acid is completed, the acid may be removed by, for example, reducing the inside pressure of the reactor. Optional sodium bicarbonate or the like may be added to neutralize the acid used for the depolymerization.

### (3) Liquid Composition

The liquid composition comprises the above-described HPMC and an organic solvent. The liquid composition contains HPMC dissolved in the organic solvent. However, an optional component or components, other than the HPMC, may be dissolved or dispersed in the organic solvent. The liquid composition is preferably in the form of a solution.

Examples of the organic solvent include, but are not limited to, methanol, ethanol, isopropyl alcohol, benzyl alcohol, acetone, ethyl acetate, toluene, xylene, ethylbenzene, propylbenzene, butylbenzene, 1,2,4-trimethylbenzene, diisopropylbenzene, diethylbenzene, methylisopropylbenzene, chloroform, dichloromethane, N-methyl-2-pyrrolidone, N-ethyl-2-pyrrolidone, dimethyl sulfoxide and dimethylformamide. Among these organic solvents, methanol, ethanol, isopropyl alcohol, acetone and dichloromethane are preferable. The organic solvent may be used singly or as a mixed solvent of two or more. It is preferable to use the mixed solvent of two or more organic solvents, or the later-described mixed solvent of an organic solvent and water.

The content of HPMC in the liquid composition is not particularly limited, and may be appropriately selected depending on the desired viscosity increase of the liquid composition. For example, the HPMC content in a total mass of the liquid composition is preferably from 0.05% by mass to 4.00% by mass, more preferably from 0.10% by mass to 3.85% by mass, still more preferably from 0.20% by mass to 3.50% by mass, further still more preferably from 0.50% by mass to 3.20% by mass, and particularly preferably from 1.00% by mass to 3.20% by mass.

In addition to HPMC and an organic solvent, the liquid composition may comprise optional water. The type of water is not particularly limited. Examples of the water include purified water, ion-exchanged water, distilled water, and tap water.

When the liquid composition contains water, the ratio of the organic solvent to the water is not particularly limited. The ratio of the organic solvent to a total of the solvents is preferably from 50.0 to 99.5% by mass, more preferably from 60.0 to 99.0% by mass, and particularly preferably from 70.0 to 95.0% by mass. When the ratio of the organic solvent to a total of the solvents is less than 50%, there is a possibility that the evaporation of the solvent may take a long time, the sterilization property may be inferior, or the peel-off ability of the coating film may be inferior, in an application of a hand disinfectant or a coating film peeling agent.

In addition to the HPMC and the organic solvent, the liquid composition may comprise an optional additive to obtain a desired property.

The optional additive is not particularly limited as long as it does not prevent the present invention from achieving the object. Examples of the additive include a fungicide, a viscosity modifier, a pH adjusting agent, a fragrance, a pigment, a dye, an antioxidant, a preservative, a moisturizer, and an evaporation inhibitor.

Examples of the fungicide include benzalkonium chloride, triclosan, and hinokitiol.

Examples of the viscosity modifier include water-soluble polymers such as guar gum, locust bean gum, xanthan gum, gellan gum, carboxymethyl cellulose, hydroxyethyl cellulose, hydrophobized hydroxypropyl methyl cellulose, cationized hydroxyethyl cellulose, carboxyvinyl polymer, and polyvinyl alcohol.

Examples of the pH adjusting agent include alkali metal hydroxides such as sodium hydroxide and potassium hydroxide; alkaline earth metal hydroxides such as calcium hydroxide and magnesium hydroxide; ammonium carbonate; ammonia; ammonia water; trisodium phosphate; disodium hydrogenphosphate; dipotassium hydrogenphosphate; secondary alkylamines such as dimethylamine and diethylamine; tertiary alkylamines such as trimethylamine and triethylamine; monoethanolamine; isopropanolamine; diethanolamine; diisopropanolamine; triethanolamine; triisopropanolamine; and polyethanolamine.

Examples of the fragrance include rose oil, jasmine oil, lavender oil, ylang ylang oil, peppermint oil, geranium oil, patchouli oil, sandalwood oil, cinnamon oil, lemon oil, orange oil, bergamot oil, limonene, β-caryophyllene, cis-3-hexenol, linalool, farnesol, β-phenylethyl alcohol, 2,6-nonadienal, citral, α-hexylcinnamic aldehyde, L-carvon, cyclopentadecanone, linalyl acetate, γ-undecalactone, and aurantiol.

Examples of the pigment include titanium dioxide, zinc oxide, barium sulfate, zinc oxide coated or compounded with anhydrous silicic acid, iron oxide (Bengala), iron titanate, γ-iron oxide, yellow iron oxide, yellow ocher, black iron oxide, carbon black, and titanium lower oxide.

Examples of the dye include acid dyes, nitro dyes, disperse dyes, basic dyes, and oxidation dye intermediates.

Examples of the antioxidant include tocopherol, tocopherol acetate, ascorbic acid, butylhydroxyanisole, and dibutylhydroxytoluene.

Examples of the preservative include methylparaben, ethylparaben, propylparaben, butylparaben, phenoxyethanol, and thiazolines.

Examples of the moisturizer include hyaluronic acid, sodium hyaluronate, polyethylene glycol, mucopolysaccharide, urea, sorbitol, chondroitin sulfate, pyrrolidone carboxylic acid, sodium lactate, polyaspartic acid, glycerin, propylene glycol, 1,3-propanediol, dipropylene glycol, 1,3-butanediol, diglycerin, and pentylene glycol.

Examples of the evaporation inhibitor include solid paraffins, and higher fatty acids and esters thereof.

The additive may be used singly or in combination of two or more. A commercially available additive, or an additive produced by a known method may be used.

The content of the additive in the liquid composition is variable appropriately depending on the desired properties and application of the liquid composition. It is, for example, preferably from 0.001% by mass to 20.000% by mass. By using said content, preferable storage stability of the liquid composition may be ensured. On the other hand, when the additive is glycerin, propylene glycol, 1,3-propanediol, dipropylene glycol, 1,3-butanediol, diglycerin or pentylene glycol, the content of the additive is preferably from 0.001% by mass to 10.000% by mass. By using said content, preferable solubility may be ensured.

The viscosity at 20°C of the liquid composition is not particularly limited. It is preferably from 100 to 50,000 mPa·s, more preferably from 500 to 20,000 mPa·s, and most preferably from 1000 to 10,000 mPa·s. The viscosity at 20°C of the liquid composition may be measured by using a single cylinder-type rotational viscometer, as described below.

### EXAMPLES

Hereinafter, the invention is described in detail with reference to Synthesis Examples, Comparative Synthesis Examples, Examples, and Comparative Examples.

### Synthesis Example 1

Pulp chips being derived from wood and having an intrinsic viscosity of 530 ml/g were immersed in a 49% by mass aqueous sodium hydroxide solution, and then an excess of the 49% by mass aqueous sodium hydroxide solution was removed to obtain alkali cellulose. The mass ratio of the sodium hydroxide in the obtained alkali cellulose to the solid component in the pulp (sodium hydroxide/solid component in the pulp) was 1.25.

The 19.9 kg (5.5 kg of solid component in the pulp) of the obtained alkali cellulose was placed in a pressure vessel (i.e., reactor, an internal volume of 100L) with a plowshare-type internal stirring blade. The pressure in the pressure vessel was reduced to -97 kPa, and then nitrogen gas was introduced to let the pressure return to atmospheric pressure. Then, the pressure was reduced to -97kPa again.

Next, a mixture of 2.75 kg of dimethyl ether and 0.48 kg of first methyl chloride was added into the reactor by using a pressure pump, and mixed with stirring at 60°C for 10 minutes to obtain a first reaction product mixture. Subsequently, 10.4 kg of second methyl chloride was added into the reactor for 50 minutes. At the same time when the addition of the second methyl chloride to the reactor was started, the addition of propylene oxide into the reactor was started using a pressure pump. The 2.86 kg of the propylene oxide was added into the reactor for 12 minutes. The inside temperature of the reactor at the beginning of adding the second methyl chloride was 60°C, and increased to 100°C for completing the reaction for a total of 2 hours to obtain crude HPMC (second reaction product mixture). In a separate experiment for sampling under the same conditions, the reaction percentage of the propylene oxide was 83.5% at the time when the total reaction percentage of the first and second methyl chlorides was 50%.

The obtained crude HPMC was washed with hot water of 95°C. Then, the washed HPMC was subjected to liquid removal by a centrifugal dehydrator, dried at 70°C for 18 hours using a fan dryer, and pulverized with a small Wiley mill. The viscosity at 20°C of the 2% by mass aqueous solution of obtained HPMC was 1400 mPa·s, as determined using a single cylinder-type rotational viscometer in accordance with the viscosity measurement by rotational viscometer of General Tests in the Japanese Pharmacopoeia Seventeenth Edition. Regarding the obtained HPMC, a degree of substitution (DS) of methoxy groups and a molar substitution (MS) of hydroxypropoxy groups, the viscosity at 20°C of the 2% by mass aqueous solution, the molar fraction (MF at 3-position) and the ratio of (MF at 3-position) to MS are shown in Table 1.

### Synthesis Example 2

HPMC was synthesized and pulverized in the same manner as in Synthesis Example 1 except that pulp chips being derived from wood and having an intrinsic viscosity of 700ml/g was used, and 3.60 kg of propylene oxide was used, the addition time of the second methyl chloride was 50 minutes, and the addition time of the propylene oxide was 30 minutes.

In a separate experiment for sampling under the same conditions, the reaction percentage of the propylene oxide was 73.4% at the time when the total reaction percentage of the first and second methyl chlorides was 50%. Regarding the obtained HPMC, a degree of substitution (DS) of methoxy groups, a molar substitution (MS) of hydroxypropoxy groups, the viscosity at 20°C of the 2% by mass aqueous solution, the molar fraction (MF at 3-position) and the ratio (MF at 3-position) to MS are shown in Table 1.

### Synthesis Example 3

HPMC was synthesized and pulverized in the same manner as in Synthesis Example 1 except that pulp chips being derived from wood and having an intrinsic viscosity of 810 ml/g was used, and 3.60 kg of propylene oxide was used, the addition time of the second methyl chloride was 50 minutes, and the addition time of propylene oxide was 30 minutes.

In a separate experiment for sampling under the same conditions, the reaction percentage of the propylene oxide was 73.4% at the time when the total reaction percentage of the first and second methyl chlorides was 50%. Regarding the obtained HPMC, a degree of substitution (DS) of methoxy groups, a molar substitution (MS) of hydroxypropoxy groups, the viscosity at 20°C of the 2% by mass aqueous solution, the molar fraction (MF at 3-position) and the ratio (MF at 3-position) to MS are shown in Table 1.

### Synthesis Example 4

HPMC was synthesized and pulverized in the same manner as in Synthesis Example 1, and the viscosity at 20°C of a 2% by mass aqueous solution of the obtained HPMC was 1400 mPa·s, as determined using a single cylinder-type rotational viscometer in accordance with the viscosity measurement by rotational viscometer in General Tests in the Japanese Pharmacopoeia Seventeen Edition.

The 1 kg of the obtained HPMC was placed in a 20L Henschel mixer, and stirred at 200 rpm, while spraying 12% by mass hydrochloric acid thereto. The 12% by mass hydrochloric acid was sprayed in such an amount as to be 0.1 parts by mass of HCl relative to 100 parts by mass of HPMC. The 500g of the resulting mixture was transferred into a 2L glass reactor and was rotated in a water bath of 80°C for 10 minutes for depolymerization. Regarding the obtained HPMC, a degree of substitution (DS) of methoxy groups, a molar substitution (MS) of hydroxypropoxy groups, the viscosity at 20°C of the 2% by mass aqueous solution, the molar fraction (MF at 3-position) and the ratio (MF at 3-position) to MS are shown in Table 1.

### Synthesis Example 5

Pulp chips being derived from wood and having an intrinsic viscosity 530 ml/g was immersed in a 49% by mass aqueous sodium hydroxide solution, and then an excess of the 49% by mass aqueous sodium hydroxide solution was removed to obtain alkali cellulose. The mass ratio of the sodium hydroxide in the obtained alkali cellulose to the solid component in the pulp (sodium hydroxide/solid component in the pulp) was 1.17.

The 19.0 kg (5.5kg of solid component in the pulp) of the obtained alkali cellulose was placed in a pressure vessel (i.e., reactor, an internal volume of 100L) with a plowshear-type internal stirring blade. The pressure in the pressure vessel was reduced to -97 kPa, and then nitrogen gas was introduced to let the pressure return to atmospheric pressure. Then, the pressure was reduced to -97 kPa again.

Next, a mixture of 2.75 kg of dimethyl ether and 0.48 kg of first methyl chloride was added into the reactor using a pressure pump, and stirred at 60°C for 10 minutes to obtain a first reaction product mixture. Subsequently, 10.1 kg of second methyl chloride was added into the reactor for 30 minutes. At the same when the addition of the second methyl chloride was started, the addition of propylene oxide into the reactor was started using a pressure pump. The 3.01 kg of propylene oxide was added into the reactor for 50 minutes. The inside temperature of the reactor at the beginning of adding the second methyl chloride was 60°C, and increased to 100°C for completing the reaction for a total of 2 hours to obtain crude HPMC (second reaction product mixture). In a separate experiment for sampling under the same conditions, the reaction percentage of the propylene oxide was 60.5% at the time when the total reaction percentage of the first and second methyl chlorides was 50%.

The obtained crude HPMC was washed with hot water of 95°C. The washed HPMC was subjected to liquid removal by a centrifugal dehydrator, dried at 70°C for 18 hours using a fan dryer, and pulverized with a small Wiley mill. A viscosity at 20°C of the 2% by mass aqueous solution of the obtained HPMC was 930 mPa·s using a single cylinder-type rotational viscometer in accordance the viscosity measurement by rotational viscometer of General Tests in the Japanese Pharmacopoeia Seventeenth Edition. Regarding the obtained HPMC, a degree of substitution (DS) of methoxy groups, a molar substitution (MS) of hydroxypropoxy groups, the viscosity at 20°C of the 2% by mass aqueous solution, the molar fraction (MF at 3-position) and the ratio (MF at 3-position) to MS are shown in Table 1.

### Synthesis Example 6

HPMC was synthesized and pulverized in the same manner as in Synthesis Example 1 except that pulp chips being derived from wood and having an intrinsic viscosity of 530 ml/g was used, and 2.10 kg of propylene oxide was used. A viscosity at 20°C of a 2% by mass aqueous solution of the obtained HPMC was 1400 mPa·s using a single cylinder-type rotational viscometer in accordance with the viscosity measurement by rotational viscometer in General Tests in the Japanese Pharmacopoeia Seventeenth Edition.

The 1 kg of the obtained HPMC was placed in a 20L Henschel mixer, and stirred at 200 rpm, while spraying 12% by mass hydrochloric acid thereto. The 12% by mass hydrochloric acid was sprayed in such an amount as to be 0.15 parts by mass of HCl relative to 100 parts by mass of HPMC. The 500 g of the resulting mixture was transferred into a 2L glass reactor and rotated in a water bath of 80°C for 40 minutes for depolymerization. Regarding the obtained HPMC, a degree of substitution (DS) of methoxy groups, a molar substitution (MS) of hydroxypropoxy groups, the viscosity at 20°C of the 2% by mass aqueous solution, the molar fraction (MF at 3-position) and the ratio (MF at 3-position) to MS are shown in Table 1.

### Comparative Synthesis Example 1

HPMC was synthesized and pulverized in the same manner as in Synthesis Example 1 except that 2.53 kg of propylene oxide was used, the addition time of the second methyl chloride was 82 minutes, and the addition time of the propylene oxide was 17 minutes. In a separate experiment for sampling under the same conditions, the reaction percentage of the propylene oxide was 91.2% at the time when the total reaction percentage of the first and second methyl chlorides was 50%.

Regarding the obtained HPMC, a degree of substitution (DS) of methoxy groups, a molar substitution (MS) of hydroxypropoxy groups, the viscosity at 20°C of the 2% by mass aqueous solution, the molar fraction (MF at 3-position) and the ratio (MF at 3-position) to MS are shown in Table 1.

### Comparative Synthesis Example 2

HPMC was synthesized and pulverized in the same manner as in Synthesis Example 2 except that 2.53 kg of propylene oxide was used, the addition time of the second methyl chloride was 82 minutes, and the addition time of the propylene oxide was 17 minutes. In a separate experiment for sampling under the same conditions, the reaction percentage of the propylene oxide was 91.1% at the time when the total reaction percentage of the first and second methyl chlorides was 50%.

Regarding the obtained HPMC, a degree of substitution (DS) of methoxy groups, a molar substitution (MS) of hydroxypropoxy groups, the viscosity at 20°C of the 2% by mass aqueous solution, the molar fraction (MF at 3-position) and the ratio (MF at 3-position) to MS are shown in Table 1.

### Comparative Synthesis Example 3

HPMC was synthesized and pulverized in the same manner as in Synthesis Example 3 except that 2.53 kg of propylene oxide was used, the addition time of the second methyl chloride was 82 minutes, and the addition time of the propylene oxide was 17 minutes. In a separate experiment for sampling under the same conditions, the reaction percentage of the propylene oxide was 91.0% at the time when the total reaction percentage of the first and second methyl chlorides was 50%.

Regarding the obtained HPMC, a degree of substitution (DS) of methoxy groups, a molar substitution (MS) of hydroxypropoxy groups, the viscosity at 20°C of the 2% by mass aqueous solution, the molar fraction (MF at 3-position) and the ratio (MF at 3-position) to MS are shown in Table 1.

### Comparative Synthesis Example 4

HPMC was synthesized and pulverized in the same manner as in Synthesis Example 4 except that 2.53 kg of propylene oxide was used, the addition time of the second methyl chloride was 82 minutes, and the addition time of the propylene oxide was 17 minutes. In a separate experiment for sampling under the same conditions, the reaction percentage of the propylene oxide was 91.2% at the time when the total reaction percentage of the first and second methyl chlorides was 50%.

The 1 kg of the obtained HPMC was placed in a 20L Henschel mixer, and stirred at 200 rpm, while spraying 12% by mass hydrochloric acid thereto. The 12% by mass hydrochloric acid was sprayed in such an amount as to be 0.1 parts by mass of HCl relative to 100 parts by mass of HPMC. The 500g of the resulting mixture was transferred into a 2L glass reactor and was rotated in a water bath of 80°C for 10 minutes for depolymerization.

Regarding the obtained HPMC, a degree of substitution (DS) of methoxy groups, a molar substitution (MS) of hydroxypropoxy groups, the viscosity at 20°C of the 2% by mass aqueous solution, the molar fraction (MF at 3-position) and the ratio (MF at 3-position) to MS are shown in Table 1.

### Comparative Synthesis Example 5

HPMC was synthesized and pulverized in the same manner as in Synthesis Example 5 except that 1.59 kg of propylene oxide was used, the addition time of the second methyl chloride was 80 minutes, and the addition time of the propylene oxide was 10 minutes. In a separate experiment for sampling under the same conditions, the reaction percentage of the propylene oxide was 92.4% at the time when the total reaction percentage of the first and second methyl chloride was 50%.

Regarding the obtained HPMC, a degree of substitution (DS) of methoxy groups, a molar substitution (MS) of hydroxypropoxy groups, the viscosity at 20°C of the 2% by mass aqueous solution, the molar fraction (MF at 3-position) and the ratio (MF at 3-position) to MS are shown in Table 1.

### Comparative Synthesis Example 6

HPMC was synthesized and pulverized in the same manner as in Synthesis Example 6 except that 1.55 kg of propylene oxide was used, the addition time of the second methyl chloride was 80 minutes, and the addition time of the propylene oxide was 10 minutes. In a separate experiment for sampling under the same conditions, the reaction percentage of the propylene oxide was 94.0% at the time when the total reaction percentage of the first and second methyl chloride was 50%.

The 1 kg of the obtained HPMC was placed in a 20L Henschel mixer, and stirred at 200 rpm, while spraying 12% by mass hydrochloric acid thereto. The 12% by mass hydrochloric acid was sprayed in such an amount as to be 0.15 parts by mass of HCl relative to 100 parts by mass of HPMC. The 500 g of the resulting mixture was transferred into a 2L glass reactor and rotated in a water bath of 80°C for 40 minutes for depolymerization.

Regarding the obtained HPMC, a degree of substitution (DS) of methoxy groups, a molar substitution (MS) of hydroxypropoxy groups, the viscosity at 20°C of the 2% by mass aqueous solution, the molar fraction (MF at 3-position) and the ratio (MF at 3-position) to MS are shown in Table 1.

**Table 1**

| | DS | MS | viscosity of 2% by mass aq. solution (mPa.s) | MF at 3-position | ratio of MF at 3-positon to MS |
|---|---|---|---|---|---|
| Syn.Ex.1 | 1.90 | 0.237 | 1400 | 0.029 | 0.122 |
| Syn.Ex.2 | 1.94 | 0.247 | 5000 | 0.036 | 0.146 |
| Syn.Ex.3 | 1.90 | 0.243 | 10000 | 0.036 | 0.148 |
| Syn.Ex.4 | 1.90 | 0.243 | 400 | 0.036 | 0.148 |
| Syn.Ex.5 | 1.90 | 0.161 | 930 | 0.028 | 0.174 |
| Syn.Ex.6 | 1.49 | 0.242 | 70 | 0.037 | 0.151 |
| Comp.Syn.Ex.1 | 1.90 | 0.240 | 1250 | 0.026 | 0.108 |
| Comp.Syn.Ex.2 | 1.90 | 0.240 | 5100 | 0.026 | 0.108 |
| Comp.Syn.Ex.3 | 1.90 | 0.240 | 10000 | 0.026 | 0.108 |
| Comp.Syn.Ex.4 | 1.90 | 0.240 | 150 | 0.026 | 0.108 |
| Comp.Syn.Ex.5 | 1.89 | 0.158 | 1300 | 0.017 | 0.108 |
| Comp.Syn.Ex.6 | 1.46 | 0.236 | 60 | 0.018 | 0.076 |

### Example 1

The HPMC produced in Synthesis Example 1 was used to produce a liquid composition by the following method, and then the transmittance, viscosity and storage stability of the liquid composition were evaluated. The results are as shown in Table 2.

### <Production of Liquid Composition Containing 8:2 (wt/wt) Ethanol/Purified Water>

The 100 g of ethanol was weighed in a wide-mouthed 250 mL reagent bottle, and was being stirred with a stirrer (ZZ-1000 produced by Tokyo Rikakikai Co., Ltd.) having a stirring blade, while adding 3.87 g of HPMC thereto. Then, the resulting mixture was subjected to addition of 25.0 g of purified water, and stirred at 400 rpm at room temperature for 2 hours to produce a liquid composition.

### <Transmittance of Composition>

The transmittance of the produced liquid composition was measured using a photoelectric colorimeter (PC-50 type produced by Kotaki Seisakusho Co., Ltd.) under conditions of 720 nm filter and cell length of 20 mm.

### <Viscosity of Liquid Composition>

The viscosity of the produced liquid composition was measured after stirred at 20°C at 30 revolutions for 120 seconds, using a single cylinder-type rotational viscometer ("DVM-BII" produced by Tokyo Keiki Co., Ltd.; Rotor Nos. 2 to 4).

### <Storage Stability of Liquid Composition>

The produce liquid composition was placed in a 100 mL reagent bottle and allowed to stand at room temperature for one week. The storage stability of the liquid composition is rated as "good" when there are no generation of turbidity or sedimentation and no change in appearance, and rated as "bad" when turbidity or sedimentation is generated.

### Examples 2 to 4

Liquid compositions were produced in the same manner as in Example 1 except that each HPMC produced in Synthesis Examples 2 to 4 was used and an amount of each HPMC was changed as shown in Table 2. The transmittance, viscosity and storage stability of each liquid composition were evaluated in the same manner as in Example 1. The results are as shown in Table 2.

### Comparative Example 1 to 4

Liquid compositions were produced in the same manner as in Example 1 except that each HPMC produced in Comparative Synthesis Examples 1 to 4 was used and an amount of each HPMC was changed as shown in Table 2. The transmittance, viscosity and storage stability of each liquid composition were evaluated in the same manner as in Example 1. The results are as shown in Table 2.

**Table 2**

| | liquid composition (HPMC solution) | | | properties of HPMC solution | | |
|---|---|---|---|---|---|---|
| | HPMC | | solvent | transmittance | viscosity | storage stability |
| | type | concentration | mass ratio of ethanol to purified water | | | |
| | | (% by mass) | | (%) | (mPa.s) | |
| Example 1 | Syn.Ex.1 | 3.0 | 8:2 | 86 | 6330 | good |
| Example 2 | Syn.Ex.2 | 2.0 | 8:2 | 74 | 5000 | good |
| Example 3 | Syn.Ex.3 | 1.5 | 8:2 | 83 | 2310 | good |
| Example 4 | Syn.Ex.4 | 3.0 | 8:2 | 81 | 2759 | good |
| Comp.Ex.1 | Comp.Syn.Ex.1 | 3.0 | 8:2 | 55 | 6130 | bad |
| Comp.Ex.2 | Comp.Syn.Ex.2 | 2.0 | 8:2 | 52 | 4220 | bad |
| Comp.Ex.3 | Comp.Syn.Ex.3 | 1.5 | 8:2 | 56 | 2150 | bad |
| Comp.Ex.4 | Comp.Syn.Ex.4 | 3.0 | 8:2 | 59 | 900 | bad |

### Example 5

A liquid composition was produced by the method described below using the HPMC produced in Synthesis Example 1. The transmittance, viscosity and storage stability of the liquid composition were evaluated by the same method as in Example 1. The results are shown in Table 3.

### <Production of Liquid Composition Containing 8:2 (wt/wt) 2-Propanol/Purified Water>

The 100.0 g of 2-propanol was weighed in a 250 mL wide-mouth reagent bottle, and was being stirred with a stirrer (ZZ-1000 produced by Tokyo Rikakikai Co., Ltd.) having a stirring blade, while adding 3.87 g of HPMC obtained in Synthesis Example 1 thereto. Then, the resulting mixture was subjected to addition of 25.0 g of purified water, and stirred at 400 rpm at room temperature for 2 hours to produce a liquid composition.

### Comparative Example 5

A liquid composition was produced in the same manner as in Example 5 except that the HPMC produced in Comparative Synthesis Example 1 was used. The transmittance, viscosity and storage stability of the liquid composition were evaluated in the same manner as in Example 5. The results are shown in Table 3.

**Table 3**

| | liquid composition (HPMC solution) | | | properties of HPMC solution | | |
|---|---|---|---|---|---|---|
| | HPMC | | solvent | transmittance | viscosity | storage stability |
| | type | concentration | mass ratio of 2-propanol to purified water | | | |
| | | (% by mass) | | (%) | (mPa·s) | |
| Example 5 | Syn.Ex.1 | 3.0 | 8:2 | 70 | 11500 | good |
| Comp.Ex.5 | Comp.Syn.Ex.1 | 3.0 | 8:2 | 40 | 7460 | bad |

### EXAMPLE 6

A liquid composition was produced by the method described below using the HPMC produced in Synthesis Example 1. The transmittance, viscosity and storage stability of the liquid composition were evaluated by the same manner as in Example 1. The results are shown in Table 4.

### <Production of Liquid Composition Containing 7.5:2.5 (wt/wt)

### dichloromethane/ethanol>

The 90 g of dichloromethane and 30 g of ethanol were weighed in a 300 mL wide-mouthed reagent bottle, and was being stirred with a stirrer (ZZ-1000 produced by Tokyo Rikakikai Co., Ltd.) having a stirring blade, while adding 3.71 g of HPMC obtained in Synthesis Example 1 thereto. The resulting mixture was stirred at room temperature at 400 rpm for 2 hours to produce a liquid composition.

### Comparative Example 6

A liquid composition was produced in the same manner as in Example 6 except that the HPMC produced in Comparative Synthesis Example 1 was used. The transmittance, viscosity and storage stability of the liquid composition were evaluated in the same manner as in Example 6. The results are shown in Table 4.

**Table 4**

| | liquid composition (HPMC solution) | | | properties of HPMC solution | | |
|---|---|---|---|---|---|---|
| | HPMC | | solvent | transmittance | viscosity | storage stability |
| | type | concentration | mass ratio of dichloromethane to ethanol | | | |
| | | (% by mass) | | (%) | (mPa·s) | |
| Example 6 | Syn.Ex.1 | 3.0 | 7.5:2.5 | 96 | 14740 | good |
| Comp.Ex.6 | Comp.Syn.Ex.1 | 3.0 | 7.5:2.5 | 79 | 10520 | bad |

### EXAMPLE 7

A liquid composition was produced by the method described below using the HPMC produced in Synthesis Example 5. The transmittance, viscosity and storage stability of the liquid composition were evaluated by the same manner as in Example 1. The results are shown in Table 5.

### <Production of Liquid Composition Containing 8:2 (wt/wt) Ethanol/Purified Water>

The 100g of ethanol was weighed into a 250 mL wide-mouthed reagent bottle, and was being stirred with a stirrer (ZZ-1000 produced by Tokyo Rikakikai Co., Ltd.) having a stirring blade, while adding 3.87 g of HPMC obtained in Synthesis Example 5 thereto. The resulting mixture was subjected to addition of 25.0 g of purified water, and stirred at room temperature at 400 rpm for 2 hours to produce a liquid composition.

### Comparative Example 7

A liquid composition was produced in the same manner as in Example 6 except that the HPMC produced in Comparative Synthesis Example 5 was used. The transmittance, viscosity and storage stability of the liquid composition were evaluated in the same manner as in Example 6. The results are shown in Table 5.

**Table 5**

| | liquid composition (HPMC solution) | | | properties of HPMC solution | | |
|---|---|---|---|---|---|---|
| | HPMC | | solvent | transmittance | viscosity | storage stability |
| | type | concentration | mass ratio of ethanol to purified water | | | |
| | | (% by mass) | | (%) | (mPa.s) | |
| Example 7 | Syn.Ex.5 | 3.0 | 8:2 | 81 | 11580 | good |
| Comp.Ex.7 | Comp.Syn.Ex.5 | 3.0 | 8;2 | 28 | 8680 | bad |

### EXAMPLE 8

A liquid composition was produced by the method described below using the HPMC produced in Synthesis Example 6. The transmittance, viscosity and storage stability of the liquid composition were evaluated by the same manner as in Example 1. The results are shown in Table 6.

### <Production of Liquid Composition Containing 6:4 (wt/wt) Ethanol/Purified Water>

The 60.0 g of ethanol was weighed in a 250 mL wide-mouthed reagent bottle, and was being stirred with a stirrer (ZZ-1000 produced by Tokyo Rikakikai Co., Ltd.) having a stirring blade, while adding 5.27 g of HPMC obtained in Synthesis Example 6 thereto. The resulting mixture was subjected to addition of 40.0 g of purified water, and stirred at room temperature at 400 rpm for 2 hours to produce a liquid composition.

### Comparative Example 8

A liquid composition was produced in the same manner as in Example 8 except that the HPMC produced in Comparative Synthesis Example 6 was used. The transmittance, viscosity and storage stability of the liquid composition were evaluated in the same manner as in Example 8. The results are shown in Table 6.

**Table 6**

| | liquid composition (HPMC solution) | | | properties of HPMC solution | | |
|---|---|---|---|---|---|---|
| | HPMC | | solvent | transmittance | viscosity | storage stability |
| | type | concentration | mass ratio of ethanol to purified water | | | |
| | | (% by mass) | | (%) | (mPa·s) | |
| Example 8 | Syn.Ex.6 | 5.0 | 6:4 | 75 | 5860 | good |
| Comp.Ex.8 | Comp.Syn.Ex.6 | 5.0 | 6:4 | 59 | 6260 | bad |

The liquid composition produced in Example 1 in which HPMC having a ratio of a molar fraction (MF at 3-position) to MS of 0.12 or more was used, had higher light transmittance and excellent storage stability, comparing with the liquid composition produced in Comparative Example 1 in which HPMC having the same substitution degrees and viscosity was used. It is considered that HPMC has a ratio of a molar fraction (MF at 3-positon) to MS of 0.12 or more so that excellent solubility is obtained.

The similar results were obtained in Examples 2 to 4 in which HPMCs having different viscosity values were used. The similar results were obtained in Examples 5 and 6 in which 8:2 (wt/wt) 2-propanol/purified water and 7.5:2.5 (wt/wt) methylene chloride/ethanol were used as respective solvents. Further, it was confirmed from the results of Examples 7 to 8 and Comparative Examples 7 to 8 that the similar results were obtained even if the substitution degrees of HPMC were different.

## Claims

1. Hydroxypropyl methyl cellulose having
a molar substitution (MS) of hydroxypropoxy groups of from 0.1 to 0.5;
a ratio (referred to as "MF at 3-position/MS") of 0.12 or more, as calculated by dividing a molar fraction (referred to as "MF at 3-position") of anhydroglucose units in which only a hydroxy group at the 3-position carbon is substituted with a hydroxypropoxy group and none of hydroxy groups at the 2-position and 6-position carbons is substituted with a hydroxypropoxy group by the molar substitution (referred to as "MS") of hydroxypropoxy groups; and
a viscosity at 20°C of more than 50 mPa·s and not more than 150000 mPa·s, as determined in a 2% by mass aqueous solution.

2. The hydroxypropyl methyl cellulose according to claim 1, wherein a degree of substitution (DS) of methoxy groups is from 1.0 to 2.0.

3. The hydroxypropyl methyl cellulose according to claim 1, wherein the molar fraction (referred to as "MF at 3-position") is 0.027 or more.

4. A liquid composition comprising:
the hydroxypropyl methyl cellulose according to any one of claims 1 to 3, and
an organic solvent.

5. The liquid composition according to claim 4, wherein a content of the hydroxypropyl methyl cellulose is more than 0% by mass and not more than 20% by mass.

6. The liquid composition according to claim 4, wherein the organic solvent is miscible with water and the liquid composition further comprises water.

7. A method for producing hydroxypropyl methyl cellulose, the method comprising steps of:
bringing pulp into contact with an alkali metal hydroxide solution to obtain alkali cellulose;
mixing the alkali cellulose with dimethyl ether and a first methylating agent to form a first reaction product mixture;
mixing the first reaction product mixture with a second methylating agent and a hydroxypropylating agent without further incorporation of an alkali metal hydroxide to obtain a second reaction product mixture;
purifying the second reaction product mixture to obtain hydroxypropyl methyl cellulose;
drying the hydroxypropyl methyl cellulose to obtain dried hydroxypropyl methyl cellulose;
wherein a reaction percentage of the hydroxypropylating agent is from 50% to 90% at the time when a total reaction percentage of the first and second methylating agents is 50%, regarding a reaction percentage of the hydroxypropylating agent and a total reaction percentage of the first and second methylating agents as respective 100% at the time when a degree of substitution (DS) of methoxy groups and a molar substitution (MS) of hydroxypropoxy groups of hydroxypropyl methyl cellulose in the second reaction product mixture become equal to a degree of substitution (DS) of methoxy groups and a molar substitution (MS) of hydroxypropoxy groups of the dried hydroxypropyl methyl cellulose, respectively.

## Patentansprüche

1. Hydroxypropylmethylcellulose mit
einer molaren Substitution (MS) von Hydroxypropoxygruppen von 0,1 bis 0,5;
einem Verhältnis (als "MF an 3-Position/MS" bezeichnet) von 0,12 oder mehr bei Berechnung durch Teilen einer molaren Fraktion (als "MF an 3-Position" bezeichnet) von Anhydroglucose-Einheiten, bei der nur eine Hydroxygruppe an dem Kohlenstoff in der 3-Position durch eine Hydroxypropoxygruppe substituiert ist und keine der Hydroxygruppen an den Kohlenstoffen in der 2-Position und der 6-Position durch eine Hydroxypropoxygruppe substituiert ist, durch die molare Substitution (als "MS" bezeichnet) von Hydroxypropoxygruppen; und
einer Viskosität bei 20 °C von mehr als 50 mPa·s und nicht mehr als bis 150000 mPa·s bei Bestimmung in einer 2 massen-%igen wässrigen Lösung.

2. Hydroxypropylmethylcellulose nach Anspruch 1, wobei ein Grad der Substitution (DS) von Methoxygruppen 1,0 bis 2,0 beträgt.

3. Hydroxypropylmethylcellulose nach Anspruch 1, wobei die molare Fraktion (als "MF an 3-Position" bezeichnet) 0,027 oder mehr beträgt.

4. Flüssige Zusammensetzung, umfassend:
die Hydroxypropylmethylcellulose nach einem der Ansprüche 1 bis 3 und
ein organisches Lösungsmittel.

5. Flüssige Zusammensetzung nach Anspruch 4, wobei ein Gehalt der Hydroxypropylmethylcellulose mehr als 0 Massen-% und nicht mehr als 20 Massen-% beträgt.

6. Flüssige Zusammensetzung nach Anspruch 4, wobei das organische Lösungsmittel mit Wasser mischbar ist und die flüssige Zusammensetzung ferner Wasser umfasst.

7. Verfahren zum Herstellen einer Hydroxypropylmethylcellulose, wobei das Verfahren die folgenden Schritte umfasst:
Inkontaktbringen von Zellstoff mit einer Alkalimetallhydroxid-Lösung unter Erhalt von Alkalicellulose;
Mischen der Alkalicellulose mit Dimethylether und einem ersten Methylierungsmittel unter Bildung eines ersten Reaktionsproduktgemischs;
Mischen des ersten Reaktionsproduktgemischs mit einem zweiten Methylierungsmittel und einem Hydroxypropylierungsmittel ohne weitere Aufnahme eines Alkalimetallhydroxids unter Erhalt eines zweiten Reaktionsproduktgemischs;
Reinigen des zweiten Reaktionsproduktgemischs unter Erhalt von Hydroxypropylmethylcellulose;
Trocknen der Hydroxypropylmethylcellulose unter Erhalt von getrockneter Hydroxypropylmethylcellulose;
wobei ein Reaktionsprozentsatz des Hydroxypropylierungsmittels 50 % bis 90 % beträgt zu dem Zeitpunkt, zu dem ein Gesamtreaktionsprozentsatz des ersten und des zweiten Methylierungsmittels 50 % beträgt, in Bezug auf einen Reaktionsprozentsatz des Hydroxypropylierungsmittels und einen Gesamtreaktionsprozentsatz des ersten und des zweiten Methylierungsmittels als jeweilige 100 % zu dem Zeitpunkt, zu dem ein Grad der Substitution (DS) von Methoxygruppen und einer molaren Substitution (MS) von Hydroxypropoxygruppen von Hydroxypropylmethylcellulose in dem zweiten Reaktionsproduktsgemisch gleich einem Grad der Substitution (DS) von Methoxygruppen bzw. einer molaren Substitution (MS) von Hydroxypropoxygruppen der getrockneten Hydroxypropylmethylcellulose wurde.

## Revendications

1. Hydroxypropylméthylcellulose ayant
une substitution molaire (MS) de groupes hydroxypropoxy de 0,1 à 0,5 ;
un rapport (appelé « MF en position 3/MS ») de 0,12 ou plus, calculé en divisant une fraction molaire (appelée « MF en position 3 ») d'unités anhydroglucose dans lesquelles seulement un groupe hydroxy sur le carbone en position 3 est substitué par un groupe hydroxypropoxy et aucun des groupes hydroxy sur les carbones en position 2 et 6 n'est substitué par un groupe hydroxypropoxy par la substitution molaire (appelée « MS ») de groupes hydroxypropoxy ; et
une viscosité à une température de 20 °C supérieure à 50 mPa·s et non supérieure à 150 000 mPa·s, telle que déterminée dans une solution aqueuse à 2 % en masse.

2. Hydroxypropylméthylcellulose selon la revendication 1, dans laquelle le degré de substitution (DS) de groupes méthoxy est de 1,0 à 2,0.

3. Hydroxypropylméthylcellulose selon la revendication 1, dans laquelle la fraction molaire (appelée « MF en position 3 ») est de 0,027 ou plus.

4. Composition liquide comprenant :
l'hydroxypropylméthylcellulose selon l'une quelconque des revendications 1 à 3, et
un solvant organique.

5. Composition liquide selon la revendication 4, dans laquelle la teneur en hydroxypropylméthylcellulose est supérieure à 0 % en masse et non supérieure à 20 % en masse.

6. Composition liquide selon la revendication 4, dans laquelle le solvant organique est miscible à l'eau et la composition liquide comprend en outre de l'eau.

7. Procédé pour la production d'hydroxypropylméthylcellulose, le procédé comprenant les étapes de :
mise en contact d'une pâte avec une solution d'hydroxyde de métal alcalin pour obtenir une cellulose alcaline ;
mélange de la cellulose alcaline avec de l'éther de diméthyle et un premier agent de méthylation pour former un premier mélange de produits de réaction ;
mélange du premier mélange de produits de réaction avec un deuxième agent de méthylation et un agent d'hydroxypropylation sans incorporer davantage d'hydroxyde de métal alcalin pour obtenir un deuxième mélange de produits de réaction ;
purification du mélange du deuxième mélange de produits de réaction pour obtenir une hydroxypropylméthylcellulose ;
séchage de l'hydroxypropylméthylcellulose pour obtenir de l'hydroxypropylméthylcellulose séchée ;
dans lequel le pourcentage de réaction de l'agent d'hydroxypropylation est de 50 % à 90 % au moment où un pourcentage de réaction total des premier et deuxième agents de méthylation est de 50 %, en ce qui concerne un pourcentage de réaction de l'agent d'hydroxypropylation et un pourcentage de réaction total des premier et second agents de méthylation respectivement de 100 % au moment où un degré de substitution (DS) de groupes méthoxy et une substitution molaire (MS) de groupes hydroxypropoxy de l'hydroxypropylméthylcellulose dans le deuxième mélange de produits de réaction deviennent égaux à un degré de substitution (DS) de groupes méthoxy et une substitution molaire (MS) de groupes hydroxypropoxy de l'hydroxypropylméthylcellulose séchée, respectivement.
